(19) Europäisches Patentamt
European Patent Office
Office européen des brevets

(11) **EP 1 665 682 B1**

(12) **FASCICULE DE BREVET EUROPEEN**

(45) Date de publication et mention
de la délivrance du brevet:
**08.10.2008 Bulletin 2008/41**

(21) Numéro de dépôt: **04787401.1**

(22) Date de dépôt: **20.09.2004**

(51) Int Cl.:
*H04L 12/56* (2006.01)    *H04B 7/005* (2006.01)

(86) Numéro de dépôt international:
**PCT/FR2004/002367**

(87) Numéro de publication internationale:
**WO 2005/032067 (07.04.2005 Gazette 2005/14)**

(54) **PROCEDE DE REGULATION DE LA PUISSANCE DE TRANSMISSION AU SEIN D'UN RESEAU DE COMMUNICATION SANS FIL**

**VERFAHREN ZUR EINSTELLUNG EINER SENDELEISTUNG IN EINEM DRAHTLOSEN KOMMUNIKATIONS-NETZ**

**METHOD FOR ADJUSTING A TRANSMITTING POWER IN A WIRE-LESS COMMUNICATIONS NETWORK**

(84) Etats contractants désignés:
**AT BE BG CH CY CZ DE DK EE ES FI FR GB GR HU IE IT LI LU MC NL PL PT RO SE SI SK TR**

(30) Priorité: **25.09.2003 FR 0311246**

(43) Date de publication de la demande:
**07.06.2006 Bulletin 2006/23**

(73) Titulaire: **FRANCE TELECOM**
**75015 Paris (FR)**

(72) Inventeurs:
• **SIMON, Gwendal**
**F-78000 Versailles (FR)**
• **KELLER, Joaquin**
**F-75018 Paris (FR)**

(74) Mandataire: **Loisel, Bertrand**
**Cabinet Plasseraud**
**52 rue de la Victoire**
**75440 Paris Cedex 09 (FR)**

(56) Documents cités:
WO-A-02/03567          US-A1- 2003 060 168

• RYU J-H ET AL: "Energy-conserving clustering scheme for multicasting in two-tier mobile ad-hoc networks" ELECTRONICS LETTERS, IEE STEVENAGE, GB, vol. 37, no. 20, 27 septembre 2001 (2001-09-27), pages 1253-1255, XP006017294 ISSN: 0013-5194
• TAEK JIN KWON ET AL: "Clustering with power control" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA,IEEE, US, 31 octobre 1999 (1999-10-31), pages 1424-1428, XP010369772 ISBN: 0-7803-5538-5

## Description

L'invention a trait au domaine des réseaux sans fil, composés d'une pluralité d'entités qui communiquent entre elles, par exemple par voie hertzienne.

Plus précisément, l'invention concerne un procédé de régulation de la puissance d'émission - également appelée puissance de transmission - des entités du réseau. Elle concerne également une unité de communication sans fil destinée à former une entité d'un tel réseau.

L'invention s'applique tout particulièrement aux réseaux *ad hoc,* c'est-à-dire aux réseaux qui ne comportent aucune infrastructure préexistante nécessaire à l'émission des données d'une entité à une autre.

Rappelons que, dans le domaine des ondes hertziennes, tout signal transmis par une entité émettrice à une entité déstinatrice est soumis à une atténuation proportionnelle à une puissance de la distance séparant ces entités (en pratique, cette puissance est comprise entre 2 et 6).

C'est pourquoi la puissance de transmission de l'entité émettrice doit être suffisante pour que le signal parvienne effectivement à l'entité destinatrice.

Il n'est toutefois pas nécessaire que le signal parvienne directement à l'entité destinatrice (on parle dans ce cas d'émission directe) : il peut en effet transiter par une entité tierce du réseau, appelée « noeud intermédiaire » ou « noeud routeur » (on parle alors d'émission indirecte).

Il est à noter que, dans un réseau ad hoc, chaque entité peut alternativement jouer les rôles d'entité émettrice, d'entité destinatrice ou de noeud intermédiaire.

Afin d'assurer la connexité du réseau, c'est-à-dire garantir que, quelles que soient les entités émettrice et destinatrice, il existe toujours un chemin permettant la délivrance à l'entité réceptrice du message en provenance de l'entité émettrice, il apparaît nécessaire que chaque entité émettrice du réseau ait connaissance de la localisation de ses entités voisines, et réciproquement.

On nomme entité voisine d'une entité émettrice toute entité dont l'entité émettrice est suffisamment proche pour recevoir un signal direct.

A chaque entité émettrice du réseau correspond une zone d'émission, dont le rayon est fonction de la puissance de transmission de cette entité.

De nombreux protocoles de communication, peu soucieux d'économie d'énergie, prévoient que la puissance de transmission de toute entité émettrice soit systématiquement réglée à sa valeur maximale.

Si de tels protocoles assurent en général la connexité du réseau, ils impliquent toutefois une consommation d'énergie importante, qui s'effectue au détriment de l'autonomie de chaque entité du réseau.

Dans un souci d'économie d'énergie visant à augmenter l'autonomie des entités, on souhaite donc réduire autant que possible la puissance de transmission des entités du réseau tout en en assurant la connexité de ce dernier.

Il existe bien des protocoles de communication qui proposent de moduler la puissance de transmission d'une entité donnée en fonction de la topologie de son voisinage (voir par exemple la demande internationale publiée sous le numéro WO 02/03567).

Le document WO 02/03567 décrit une technique de communication permettant de moduler la puissance de transmission d'une entité donnée pour la transmission d'un message en fonction de celles des entités voisines de l'entité donnée à laquelle cette dernière envoie le message.

Le document US2003/0060168 présente une technique pour sélectionner certains terminaux très proches d'un premier terminal, afin de créer un groupe ad hoc constitué de ces terminaux très proches et du premier terminal. Pour cela, on réduit d'abord la puissance de transmission du premier terminal et on envoie depuis le premier terminal un signal d'invitation. Les adresses des terminaux à proximité immédiate et ayant répondu au signal d'invitation sont fournies à l'utilisateur du premier terminal, qui dispose ainsi d'un extrait de la liste de terminaux actifs correspondant à ceux présents dans la salle de réunion. Il peut ainsi sélectionner dans cet extrait les terminaux pour créer le groupe ad hoc. Puis la puissance de transmission est ramenée à un niveau de transmission normal pour supporter la communication entre les terminaux du groupe ad hoc créé.

Mais le protocole employé est relativement complexe et requiert des mémoires ainsi que des algorithmes imposants qui grèvent les coûts et entravent le bon fonctionnement du réseau.

L'invention vise notamment à résoudre les inconvénients précités en proposant, entre autres objets, un procédé de régulation de la puissance de transmission d'une entité émettrice au sein d'un réseau de communication sans fil qui permette, de manière simple et efficace, de limiter la consommation d'énergie au sein du réseau tout en garantissant la connexité de celui-ci.

A cet effet, l'invention propose, selon un premier objet, un procédé de régulation de la puissance d'une unité émettrice dans un réseau d'entités communicantes sans fil tel que défini dans la revendication 1. Des modes de réalisation préférés en sont énoncés dans les revendications 2 à 11.

Ce procédé, appliqué à chacune des entités d'un réseau sans fil, permet d'en garantir la connexité tout en limitant la puissance consommée.

Suivant un second objet, l'invention propose également une unité de communication sans fil telle que définie dans la revendication 12, un réseau tel que défini dans la revendication 16 et un produit programme d'ordinateur tel que défini dans la revendication 17.

D'autres objets et avantages de l'invention apparaîtront à la lumière de la description qui va suivre, faite en référence aux dessins annexés dans lesquels :

- la figure 1 est un schéma représentant au moins partiellement un réseau comprenant un nombre relativement restreint d'entités communicantes sans fil ;

- la figure 2 est un schéma illustrant la topologie du réseau de la figure 1, sur lequel les entités sont représentées sous la forme de noeuds ;

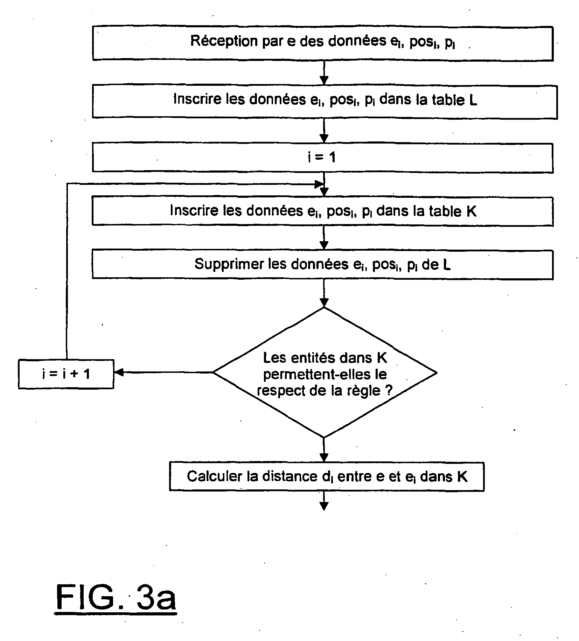

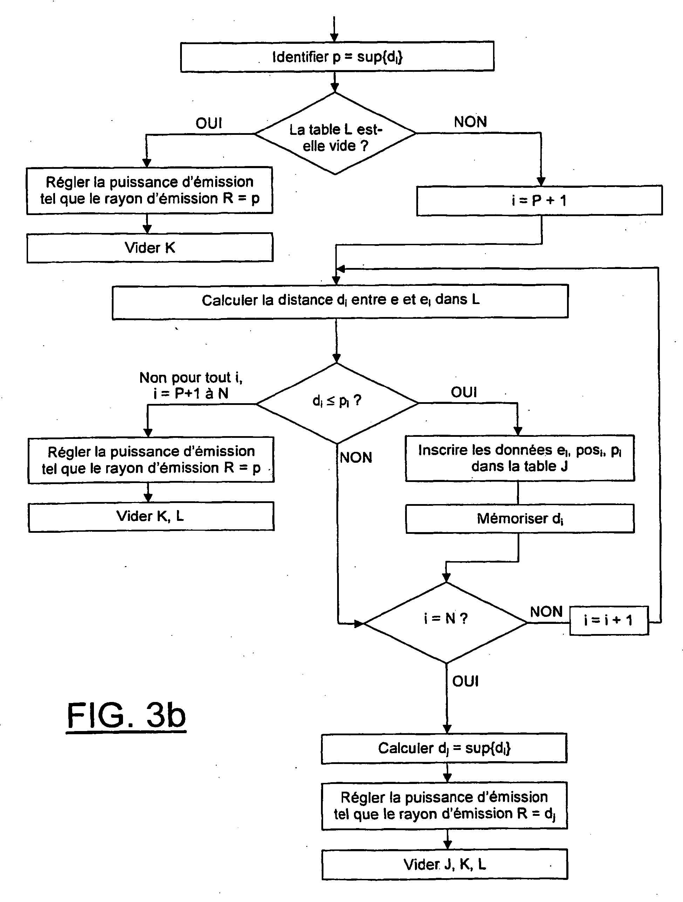

- les figures 3a et. 3b constituent ensemble un diagramme illustrant les différentes étapes du procédé de régulation de la puissance de transmission d'une entité communicante du réseau ; et

- la figure 4 est un schéma représentant au moins partiellement un réseau comprenant un grand nombre d'entités communicantes sans fil.

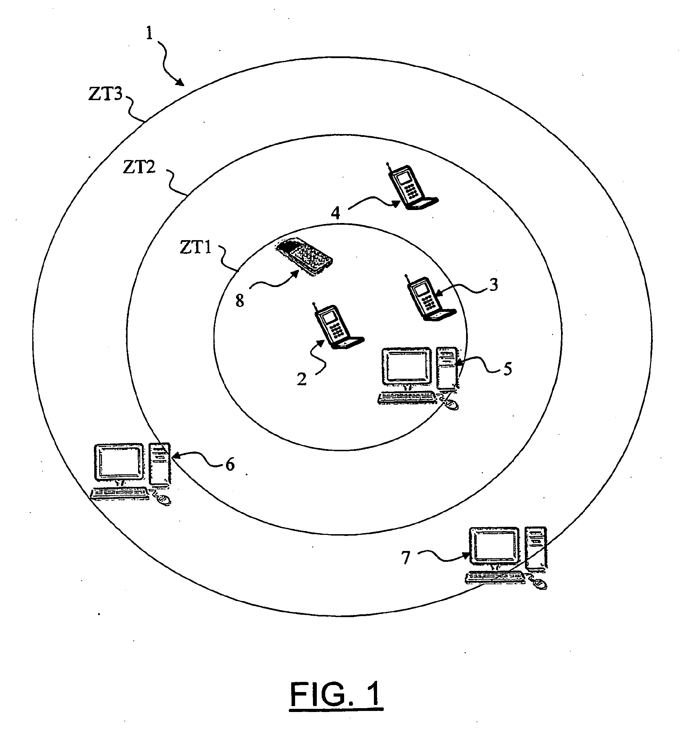

Sur la figure 1 est partiellement représenté un réseau 1 local sans fil interconnecté. Il s'agit par exemple d'un réseau hertzien de type ad hoc conforme à la norme de communication radioélectrique IEEE 802.11b, surnommée Wi-Fi (Wireless Fidelity).

Le réseau 1 comporte une pluralité d'entités dont on a représenté trois téléphones mobiles 2, 3, 4, trois ordinateurs 5, 6, 7 équipés de modems Wi-Fi ainsi qu'une télécommande hertzienne 8.

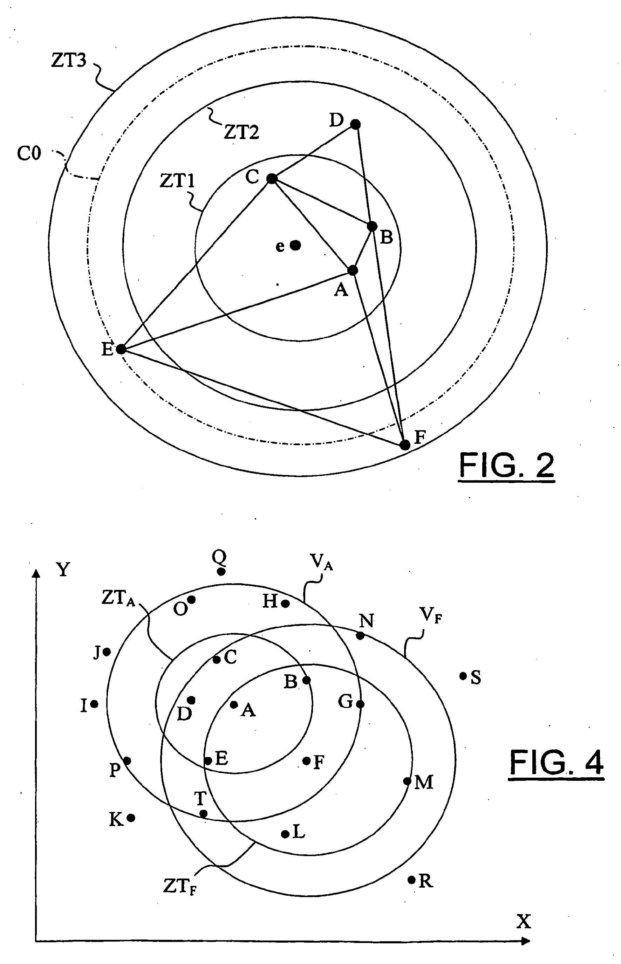

La figure 2 illustre la topologie du réseau 1, les entités 2 à 7 y étant représentées sous la forme de noeuds auxquels sont attribuées respectivement les lettres e, B, D, A, E, F, C.

Dans cet exemple, l'ordre alphabétique selon lequel les noeuds A à F sont classés correspond à un éloignement croissant du noeud émetteur e.

Chaque entité 2 à 8 est équipée d'un système de communication sans fil dont la puissance d'émission (également appelée puissance de transmission) est réglable.

La zone d'émission ou de transmission du noeud e est définie comme la partie de l'espace où un noeud récepteur est (ou serait) apte à recevoir les signaux émis depuis le noeud e.

En théorie, la zone de transmission est une sphère centrée sur l'entité émettrice, dont le rayon varie en fonction de la puissance de transmission. En réalité, le réseau 1 étant sensiblement plan, on peut assimiler la zone de transmission à un disque centré sur l'entité émettrice.

Toute entité du réseau est apte à transmettre directement un signal à une entité destinatrice dès lors que cette dernière se trouve au sein de la zone d'émission de l'entité émettrice (il s'agit alors d'émission directe).

Lorsqu'une entité destinatrice ne se trouve pas dans la zone de transmission de l'entité émettrice, le signal peut transiter par un noeud routeur ou par une cascade de noeuds routeurs situés chacun dans la zone de transmission du précédent, l'essentiel étant que le signal parvienne, in fine, à l'entité destinatrice (il s'agit alors d'émission indirecte).

On a également représenté sur les figures 1 et 2 plusieurs zones de transmission ZT1, ZT2, ZT3 de rayon croissant qui, centrées sur le téléphone 2 émetteur (respectivement sur l'entité émettrice e), correspondent à des puissances de transmission croissantes de son système de communication.

Par ailleurs, au téléphone 2 (respectivement à chaque entité émettrice e) correspond un ensemble d'entités voisines, qui sont les entités dont le téléphone est apte à recevoir un signal.

Ainsi, dans l'exemple représenté, l'ensemble des entités voisines du téléphone 2 comprend les téléphones 3 et 4, les ordinateurs 5, 6 et 7 et la télécommande 8 (respectivement, d'un point de vue topologique, l'ensemble des noeuds voisins du noeud e comprend les noeuds A à F).

Le réseau 1 illustré sur la figure 1 étant proposé à titre purement indicatif, on raisonne, dans ce qui suit, de manière essentiellement topologique.

Comme cela est visible sur la figure 2, la première zone de transmission ZT1, de rayon le plus faible, englobe les entités A, B, et C qui forment ensemble un triangle dont l'entité émettrice e est exclue.

La zone de transmission ZT2, de rayon intermédiaire, englobe les entités A, B, C et D qui forment ensemble un quadrilatère dont l'entité e est également exclue.

Par contre, la zone de transmission ZT3, de rayon supérieur, englobe les entités A à F qui, ensemble, forment une constellation (en d'autres termes, un nuage de points) circonscrivant l'entité émettrice e, c'est-à-dire une constellation au sein de laquelle il est possible de tracer un polygone convexe (au moins un triangle) circonscrivant l'entité émettrice e.

Ainsi, au sein de la constellation ABCDEF, le triangle AEC circonscrit-il l'entité émettrice e.

Parmi l'ensemble des constellations ABC, ABCD, ABCDE et ABCDEF, seules les constellations ABCDE et ABCDEF circonscrivent l'entité émettrice e, la constellation ABCDE étant celle qui contient le plus petit nombre d'entités ou, autrement dit, la constellation ABCDE étant la constellation dont le cercle, centré sur l'entité émettrice, qui la contient strictement, présente le rayon le plus faible (il s'agit en l'occurrence du cercle CO de centre e et de rayon [eE]).

Par convention, on dénomme constellation minimale associée à l'entité émettrice e une telle constellation.

D'une manière générale, on définit la constellation minimale associée à une entité émettrice e comme étant, parmi l'ensemble des constellations qui sont incluses dans un cercle centré sur l'entité émettrice e et qui circonscrivent cette dernière (c'est-à-dire dont trois au moins des entités forment un polygone convexe circonscrivant l'entité émettrice e), la constellation qui contient le plus petit nombre d'entités.

L'on souhaite s'assurer de la connexité permanente d'un réseau composé d'une pluralité d'entités $e_i$ (où i est un entier naturel), de manière à garantir la délivrance des signaux quelles que soient les entités émettrice e et réceptrice $e_i$. Concrètement, on souhaite réguler la puissance de transmission d'une entité émettrice donnée de telle manière que sa zone de transmission englobe au moins sa constellation minimale.

A cet effet, on définit un critère de connexité, applicable à chaque entité du réseau et dont nous verrons l'utilité par la suite.

Ce critère est défini comme suit :

Toute entité $e_i$ vérifie le critère de connexité si le rayon de sa zone de transmission est ajusté de telle manière que cette zone de transmission englobe au plus juste la constellation minimale associée à l'entité $e_i$.

On décrit ci-après le procédé de contrôle de la puissance de transmission permettant, pour chaque entité, de procéder à cet ajustement avant l'émission par cette entité d'un message comprenant un certain nombre d'informations listées ci-dessous.

Bien que ce procédé soit applicable à chacune des entités $e_i$ du réseau, par simple commodité, on décrit ce procédé pour une entité émettrice e donnée du réseau.

On commence par identifier le voisinage de l'entité émettrice e, c'est-à-dire l'ensemble des N entités $e_i$ (i = 1 à N), dites voisines, dont l'entité émettrice e est apte à capter les messages.

A cet effet, on inscrit dans une première table L, pour chaque entité $e_i$ (i = 1 à N) :

- son identifiant $e_i$,

- la position $pos_i$ de l'entité $e_i$, caractérisée par exemple par les coordonnées cartésiennes bidimensionnelles ($x_i$, $y_i$) de l'entité $e_i$ dans un repère plan prédéterminé par rapport auquel sont positionnées toutes les entités du réseau, et

- la distance minimale d'émission de l'entité $e_i$, c'est-à-dire la distance séparant l'entité $e_i$ de la plus lointaine des entités appartenant à sa constellation minimale associée.

Ces données, communiquées par chaque entité $e_i$ et reçues par l'entité émettrice e, sont mémorisées au sein de celle-ci. Par exemple, la table L est stockée dans une mémoire dont est munie l'entité émettrice e.

Ces données relatives au voisinage de l'entité émettrice e sont inscrites dans la table L par ordre croissant de l'indice i en fonction de la distance séparant l'entité émettrice e des entités $e_i$. Autrement dit, on affecte l'indice i = 1 à l'entité la plus proche de l'entité émettrice e, et i = N à l'entité la plus lointaine. Ce classement peut être effectué au moyen d'un simple comparateur, la distance séparant l'entité émettrice e de chacune des entités $e_i$ voisines pouvant être déduite de leurs coordonnées respectives.

En effet, si les entités sont repérées par leurs coordonnées cartésiennes (les coordonnées de l'entité émettrice étant notées x, y et les coordonnées des entités voisines $x_i$, $y_i$, i - 1 à N), la distance $d_i$ séparant l'entité émettrice de l'entité voisine $e_i$ est fournie par la formule classique suivante :

$$d_i = \sqrt{(x - x_i)^2 + (y - y_i)^2}.$$

Ainsi la table L se présente-elle sous la forme d'une matrice à 4 colonnes et N lignes :

$$L = \begin{bmatrix} e_1 & x_1 & y_1 & p_1 \\ e_2 & x_2 & y_2 & p_2 \\ \dots & \dots & \dots & \dots \\ \dots & \dots & \dots & \dots \\ e_N & x_N & y_N & p_N \end{bmatrix}$$

L'étape suivante consiste à identifier, parmi les entités voisines $e_i$, les entités appartenant à la constellation minimale associée à l'entité émettrice e.

A cet effet, on constitue une deuxième table K (à quatre colonnes et un nombre de lignes encore indéfini) à partir de la première table L, de la manière suivante.

On commence par affecter à l'indice i la valeur 1.

Les données concernant $e_1$ sont transférées vers la table K, c'est-à-dire qu'elles sont inscrites dans la table K et supprimées de la table L.

On répète cette opération en incrémentant à chaque répétition l'indice i d'une unité, tant que les entités de la table K ainsi constituée ne permettent pas le respect du critère de connexité pour l'entité émettrice e.

On vérifie à chaque itération si le critère de connexité est satisfait. Dès lors que le critère de connexité est satisfait, on cesse l'incrémentation.

La table K contient alors les P entités $e_i$ (i = 1 à P, où P ≤ N) qui forment la constellation minimale associée à l'entité émettrice e.

La table K permet le calcul de la distance minimale d'émission, notée p, de l'entité émettrice e. Cette distance minimale d'émission p est égale à la distance séparant l'entité e de l'entité la plus lointaine de la constellation minimale, c'est-à-dire, dans la table K, la plus lointaine de l'entité émettrice e. Compte tenu du classement déjà effectué, il s'agit de l'entité $e_p$ située sur la dernière ligne de la table K.

Si elle n'a pas été mémorisée précédemment, on recalcule ensuite la distance $d_p$ entre l'entité émettrice e et l'entité $e_p$ la plus lointaine de l'entité émettrice e, dans la constellation minimale.

A titre d'exemple, dans le cas du réseau illustré sur la figure 2, si l'on considère comme entité émettrice l'entité e, sa distance minimale d'émission est la distance séparant l'entité e de l'entité E.

Il est à noter que si P = N, alors la table L est vide, et la table K est égale à la table L d'origine.

Concrètement, cela signifie que la constellation minimale de l'entité émettrice e comprend tout son voisinage, c'est-à-dire la totalité des entités voisines $e_i$, pour i = 1 à N.

Dans ce cas, l'étape suivante consiste à régler la puissance de transmission de l'entité e de telle sorte que le rayon R de sa zone de transmission ZT soit (en théorie) égal à sa distance minimale d'émission p. En pratique, la puissance de transmission est réglée à la valeur minimale qui permette toutefois à un message émis par l'entité émettrice d'atteindre toutes les entités de la constellation minimale associée à l'entité émettrice.

L'étape suivante consiste, pour l'entité e, à émettre un message comprenant ses données propres, à savoir son identifiant e, sa position (x, y) et sa distance minimale d'émission p.

Ces données sont reçues par les entités $e_i$ incluses dans la zone de transmission ZT, en l'occurrence par les entités $e_i$ constituant la constellation minimale de l'entité émettrice e.

Si P < N, alors la table L n'a pas été entièrement vidée lors de la constitution de la table K, et contient les données $e_i$, $x_i$, $y_i$ et $p_i$ relatives aux N-P entités restantes après la constitution de la table K, ces entités étant à la fois voisines de l'entité émettrice e et situées à l'extérieur de sa constellation minimale.

Parmi ces entités, l'on souhaite identifier, si elles existent, celles dont la constellation minimale contient l'entité émettrice e.

L'on souhaite en effet que les données (identifiant e, position (x, y), distance minimale d'émission p) de l'entité émettrice e parviennent à chacune de ces entités périphériques, puisque, comme nous venons de le voir, ces données sont indispensables au calcul de la distance minimale d'émission associée à chacune de ces entités périphériques.

Ainsi, l'étape suivante consiste à affecter à l'indice i la valeur P+1.

Si elle n'a pas été mémorisée précédemment, on recalcule la distance $d_i$ entre l'entité émettrice e et chaque entité $e_i$ restant dans la table L (c'est-à-dire chaque entité située à l'extérieur de la constellation minimale).

Puis on compare cette distance $d_i$ à la distance minimale d'émission $p_i$ de l'entité $e_i$ correspondante. En d'autres termes, on vérifie si l'entité émettrice e est contenue dans la constellation minimale associée à cette entité $e_i$.

Si $d_i > p_i$, alors l'entité émettrice e est située à l'extérieur de la constellation minimale associée à l'entité

$e_i$. Il n'est donc pas nécessaire que les données relatives à l'entité émettrice e parviennent à l'entité $e_i$.

Tant que i est inférieur à N, on incrémente donc l'indice i d'une unité et on répète cette opération pour l'entité suivante.

Si au contraire $d_i \leq p_i$, alors l'entité émettrice est effectivement comprise dans la constellation minimale associée à l'entité $e_i$. Il faudra donc veiller à ce que le signal émis par l'entité émettrice e parvienne (de manière directe) à l'entité $e_i$.

On inscrit donc les données relatives à l'entité $e_i$, à savoir l'identifiant $e_i$, sa position $x_i$, $y_i$ et sa distance minimale d'émission $p_i$ dans une troisième table J, qui, comme la table K, est une matrice à quatre colonnes et un nombre de lignes encore indéfini.

Tant que i est strictement inférieur à N, on incrémente l'indice i d'une unité et on répète les opérations qui viennent d'être décrites, pour les entités suivantes.

Ces opérations sont stoppées dès lors que i = N, c'est-à-dire lorsque toutes les distances séparant l'entité émettrice e des entités $e_i$ (i = P+1 à N) ont été calculées et comparées aux distances minimales d'émission $p_i$ associées aux entités $e_i$.

Deux hypothèses se présentent alors, selon que la troisième table J est vide ou qu'elle contient au moins une entité.

Si la troisième table J est vide, alors il n'existe aucune entité périphérique. En d'autres termes, il n'existe, dans le voisinage de l'entité émettrice e, hors de sa constellation minimale associée, aucune entité dont la propre constellation minimale contienne l'entité émettrice e.

Dans ce cas, l'étape suivante consiste à régler la puissance de transmission de l'entité e de telle sorte que le rayon R de sa zone de transmission ZT soit (en théorie) égal à sa distance minimale d'émission p. En pratique, la puissance de transmission est réglée à la valeur minimale qui permette à un message émis par l'entité émettrice e d'atteindre toutes les entités de la constellation minimale associée à l'entité émettrice.

L'étape suivante consiste, pour l'entité e, à émettre ses données, à savoir son identifiant e, sa position x, y et sa distance minimale d'émission p.

Ces données sont reçues par les entités $e_i$ incluses dans la zone de transmission ZT, en l'occurrence les entités $e_i$ constituant la constellation minimale de l'entité émettrice e.

Si la troisième table J n'est pas vide, alors les étapes suivantes consistent à identifier, parmi les entités $e_i$ périphériques, répertoriées dans la troisième table J, l'entité $e_j$ la plus lointaine de l'entité émettrice e.

Compte tenu du classement déjà effectué, il s'agit de l'entité $e_j$ située sur la dernière ligne de la troisième table J, puis à (re)calculer la distance $d_j$ séparant l'entité émettrice e de cette entité la plus lointaine $e_j$, si cette distance $d_j$ n'a pas été mémorisée avant ou lors de la constitution de la première table L.

L'étape suivante consiste à régler la puissance de transmission de l'entité e de telle sorte que le rayon R de sa zone de transmission ZT soit (en théorie) égal à la distance $d_j$.

En pratique, la puissance de transmission est réglée à la valeur minimale qui permet à un message émis par l'entité émettrice e d'atteindre toutes les entités périphériques identifiées pour l'entité émettrice e.

L'étape suivante consiste alors, pour l'entité e, à émettre ses données, à savoir son identifiant e, sa position x, y et sa distance minimale d'émission p.

Ces données sont reçues par les entités $e_i$ incluses dans la zone de transmission ZT, y compris les entités périphériques $e_i$ qui, en dehors de la constellation minimale, ont besoin des données relatives à l'entité émettrice e pour effectuer leur propre calcul de leur distance minimale d'émission $p_i$, laquelle est calculée suivant le mode opératoire décrit ci-dessus, le procédé qui vient d'être décrit étant en effet applicable, comme nous l'avons déjà indiqué, à chaque entité $e_i$ du réseau.

Une fois que l'entité émettrice e a émis ses données; les tables non vides sont vidées en vue de la répétition ultérieure du procédé.

Bien entendu, la périodicité de la répétition du procédé peut être réglée pour chaque entité, notamment en fonction de sa mobilité propre, ou plus généralement pour l'ensemble du réseau.

Concrètement, dans un réseau géographiquement restreint comprenant un grand nombre d'entités mobiles (par exemple des téléphones mobiles) par rapport au nombre total d'entités, la périodicité des entités mobiles peut être réglée à quelques secondes.

Par contre, dans un réseau géographiquement étendu et ne comprenant qu'un petit nombre d'entités mobiles, cette périodicité peut atteindre plusieurs dizaines de secondes, voire dépasser la minute.

Le procédé qui vient d'être décrit, qui est appliqué de manière simultanée et en parallèle de ce procédé à toutes les entités du réseau permet d'assurer la connexité de celui-ci, car la puissance de transmission de chaque entité émettrice est ajustée de manière à englober au moins la constellation minimale associée à cette entité (ce qui signifie que l'on est assuré que les entités les plus proches entourant l'entité émettrice pourront recevoir, et éventuellement relayer, le signal en provenance de l'entité émettrice), et, lorsqu'elles existent, les entités périphériques dont le signal en provenance de l'entité émettrice est nécessaire au fonctionnement du procédé.

Il peut arriver qu'une entité émettrice e se situe, au moins momentanément, à la lisière du réseau, c'est-à-dire qu'aucune constellation minimale ne peut, topologiquement, lui être associée.

Dans ce cas, afin d'assurer le fonctionnement du réseau, la puissance de transmission de cette entité e est réglée à son maximum avant l'émission de ses données, la distance minimale d'émission p étant ajustée pour être égale au rayon de la zone de transmission correspondante.

Bien entendu, toute unité de communication sans fil (tel qu'un téléphone mobile ou un ordinateur) destinée à mettre en oeuvre le procédé qui vient d'être décrit sera munie de moyens prévus à cet effet, propres à mettre en oeuvre chacune des étapes du procédé.

Concrètement, ces moyens peuvent se présenter sous la forme d'un programme informatique inscrit dans un processeur équipant cette unité.

On donne ci-après deux exemples d'application du procédé qui vient d'être décrit à un même réseau, illustré sur la figure 4, comprenant 20 entités référencées de A à T et positionnées dans un repère XY, orthogonal, plan.

Exemple 1

Dans cet exemple, on choisit comme entité émettrice l'entité A, dont on suppose qu'elle est sur le point de transmettre ses données.

Comme cela est visible sur la figure 4, à l'entité A correspond un voisinage VA qui inclut les entités B, C, D, E, F, G, H, O P, T.

On donne ci-après, pour chaque entité A, B, C, D, E, F, G, H, O P, T, sous forme d'un ensemble de trois valeurs (exprimées par exemple en mètres), ses coordonnées dans le repère XY (les deux premières valeurs), ainsi que sa distance minimale d'émission (la troisième valeur) :

A (47, 58, 18)
B (64, 65, 18)
C (43, 70, 22)
D (37, 60, 22)
E (41, 45, 15)
F (64, 44, 20)
G (72, 59, 28)
H (59, 84, 22)
O (37, 85, 14)
P (22, 45, 19)
T (40, 31, 20)

L'entité émettrice A reçoit les données des entités B, C, D, E, F, G, H, O P, T de son voisinage $V_A$.

On commence par affecter à chacune des entités D, C, E, B, F, H, O P, T, G (classées par ordre d'éloignement de l'entité émettrice A) les indices 1 à 10.

Puis on constitue la table L à partir des données reçues du voisinage de l'entité A. Il résulte des valeurs données ci-dessus que la table L s'établit comme suit :

$$L = \begin{bmatrix} e_1 & 37 & 60 & 22 \\ e_2 & 43 & 70 & 22 \\ e_3 & 41 & 45 & 15 \\ e_4 & 64 & 65 & 18 \\ e_5 & 64 & 44 & 20 \\ e_6 & 59 & 84 & 22 \\ e_7 & 37 & 85 & 14 \\ e_8 & 22 & 45 & 19 \\ e_9 & 40 & 31 & 20 \\ e_{10} & 72 & 59 & 27 \end{bmatrix}$$

A partir de la table L, on construit la table K, afin de déterminer la distance minimale d'émission p de l'entité A.

Des itérations successives montrent (ce qui apparaît géométriquement sur la figure 4) que la constellation minimale de l'entité A est constituée des entités $e_1$, $e_2$, $e_3$ et $e_4$, c'est-à-dire des entités B, C, D, E.

La table K s'établit donc comme suit :

$$K = \begin{bmatrix} e_1 & 37 & 60 & 22 \\ e_2 & 43 & 70 & 22 \\ e_3 & 41 & 45 & 15 \\ e_4 & 64 & 65 & 18 \end{bmatrix}$$

tandis que la table L s'établit comme suit :

$$L = \begin{bmatrix} e_5 & 64 & 44 & 20 \\ e_6 & 59 & 84 & 22 \\ e_7 & 37 & 85 & 14 \\ e_8 & 22 & 45 & 19 \\ e_9 & 40 & 31 & 20 \\ e_{10} & 72 & 59 & 27 \end{bmatrix}$$

On déduit de la table K que l'entité la plus lointaine de l'entité émettrice A est l'entité $e_4$ (B), la distance $d_4$ séparant les entités A et B étant égale à 18 m.

Il en résulte que la distance minimale d'émission p de l'entité A, égale à $d_4$, est de 18 m.

On identifie ensuite les éventuelles entités périphériques.

Des calculs successifs fournissent les distances séparant l'entité A des entités $e_5$ (F) à $e_{10}$ (T), ces distances étant systématiquement comparées aux va-leurs $p_5$ à $p_{10}$ des distances minimales d'émission des entités correspondantes. Les valeurs $d_5$ à $d_{10}$ sont les suivantes :

$d_5 = 22$ m
$d_6 = 28$ m
$d_7 = 28$ m
$d_8 = 29$ m
$d_9 = 29$ m
$d_{10} = 30$ m

Or il ressort de la table L que les valeurs des distances minimales d'émission $p_5$ à $p_{10}$ sont les suivantes :

p5 = 20 m
p6 = 22 m
p7 = 24 m
p8 = 19 m
p9 = 20 m
p10 = 27 m

Ainsi, quel que soit i (i = 5 à 10), $d_i$ est strictement supérieur à $P_i$, ce qui signifie qu'aucune des constellations minimales des entités $e_5$ (F) à $e_{10}$ (G) ne contient l'entité émettrice A. Il n'est donc constitué aucune table J.

Aussi l'étape suivante consiste-t-elle à régler la puissance de transmission de l'entité A de manière que le rayon de sa zone de transmission $ZT_A$ soit égal à sa distance minimale d'émission, c'est-à-dire à la distance $d_4$, séparant les entités A et B.

L'étape suivante consiste, pour l'entité A, à émettre ses données, à savoir son identifiant A, sa position, repérée par les valeurs cartésiennes 47 et 58, ainsi que sa distance minimale d'émission, dont la valeur est égale à 18.

Ces données sont reçues par les entités incluses dans la zone de transmission de l'entité A, à savoir les entités B, C, D et E.

Exemple 2

Dans cet exemple, on choisit comme entité émettrice l'entité F, dont on suppose qu'elle est sur le point de transmettre ses données.

Comme cela est visible sur la figure 4, à l'entité F correspond un voisinage $V_F$ qui inclut les entités A, B, C, D, E, G, L, M, N, T.

On donne ci-après, pour chaque entité A, B, C, D, E, F, G, L, M, N, T, sous forme d'un ensemble de trois valeurs (exprimées par exemple en mètres), ses coordonnées dans le repère XY (les deux premières valeurs), ainsi que sa distance minimale d'émission (la troisième valeur) :

A (47, 58, 18)
B (64, 65, 18)
C (43, 70, 22)

D (37, 60, 22)
E (41, 45, 15)
F (64, 44, 20)
G (72, 59, 28)
L (59, 22, 33)
M (89, 40, 38)
N (77, 76, 22)
T (40, 31, 20)

L'entité émettrice F reçoit les données des entités A, B, C, D, E, G, L, M, N, T, situées dans son voisinage $V_F$.

On commence par affecter à chacune des entités G, L, B, A, E, M, T, D, C, N (ordonnées suivant leur éloignement de l'entité émettrice F), les indices 1 à 10.

Puis on constitue la table L à partir des données reçues du voisinage de l'entité F. Il résulte des valeurs données ci-dessus que la table L s'établit comme suit :

$$L = \begin{bmatrix} e_1 & 72 & 59 & 28 \\ e_2 & 59 & 22 & 33 \\ e_3 & 64 & 65 & 18 \\ e_4 & 47 & 58 & 18 \\ e_5 & 41 & 45 & 15 \\ e_6 & 89 & 40 & 38 \\ e_7 & 40 & 31 & 20 \\ e_8 & 37 & 60 & 22 \\ e_9 & 43 & 70 & 22 \\ e_{10} & 77 & 76 & 22 \end{bmatrix}$$

A partir de la table L, on construit la table K, afin de déterminer la distance minimale d'émission p de l'entité F.

Des itérations successives montrent (ce qui apparaît géométriquement sur la figure 4) que la constellation minimale associée à l'entité A est constituée des entités $e_1$, $e_2$ et $e_3$, c'est-à-dire G, L et B (figure 4).

La table K s'établit donc comme suit, les indices étant réaffectés aux entités B, G et L à partir de 1 :

$$K = \begin{bmatrix} e_1 & 72 & 59 & 28 \\ e_2 & 29 & 22 & 33 \\ e_3 & 64 & 65 & 18 \end{bmatrix}$$

tandis que la table L s'établit comme suit :

$$L = \begin{bmatrix} e_4 & 47 & 58 & 18 \\ e_5 & 41 & 45 & 15 \\ e_6 & 89 & 40 & 38 \\ e_7 & 40 & 31 & 20 \\ e_8 & 37 & 60 & 22 \\ e_9 & 43 & 70 & 22 \\ e_{10} & 77 & 76 & 22 \end{bmatrix}$$

Il résulte de la table K que l'entité la plus lointaine de l'entité émettrice F est l'entité $e_3$ (B), la distance $d_3$ séparant les entités F et B étant égale à 20 m.

On en déduit que la distance minimale d'émission p de l'entité F, égale à $d_3$, est de 20 m.

On identifie ensuite les éventuelles entités périphériques.

Des calculs successifs fournissent les distances séparant l'entité F des entités, identifiées dans la table L ci-dessus $e_4$ (A) à $e_{10}$ (N), ces distances étant systématiquement comparées aux valeurs $p_4$ à $p_{10}$ des distances minimales d'émission des entités correspondantes. Les valeurs $d_1$ à $d_7$ sont les suivantes :

$d_4$ = 22 m
$d_5$ = 23 m
$d_6$ = 25 m
$d_7$ = 23 m
$d_8$ = 31 m
$d_9$ = 33 m
$d_{10}$ = 34 m

Il ressort de la table L que les valeurs des distances minimales d'émission $p_1$ à $p_7$ sont les suivantes :

$P_4$ = 18 m
$P_5$ = 15 m
$P_6$ = 38 m
$p_7$ = 20 m
$p_8$ = 22 m
$p_9$ = 22 m
$p_{10}$ = 22 m

Comme on peut le constater, $d_6$ est inférieur à $p_6$, ce qui signifie que l'entité émettrice F est contenue dans la constellation minimale de l'entité $e_6$ (M).

Par conséquent, l'entité $e_5$ est inscrite dans la matrice J associée à l'entité F.

Cette propriété ne se vérifiant pour aucune autre entité inscrite dans la matrice L, la matrice J ne comprend que les données associées à l'entité M.

Par conséquent, la puissance de transmission de l'entité F est réglée de manière que le rayon R de sa zone de transmission $ZT_F$ soit égal à la distance $d_6$, soit 25 m.

L'étape suivante consiste, pour l'entité F, à émettre ses données, à savoir son identifiant F, sa position (les valeurs 64 et 44), ainsi que sa distance minimale d'émission, égale à 20.

Ces données sont reçues par les entités incluses dans la zone de transmission $ZT_F$ de l'entité F, à savoir les entités A, B, E, G, L et M.

## Revendications

1. Procédé de régulation de la puissance de transmission d'une entité émettrice (e) sans fil dans un réseau d'entités communicantes sans fil, comportant l'étape consistant à identifier les entités voisines ($e_i$ de l'entité émettrice (e), c'est-à-dire les entités du réseau, distinctes de l'entité émettrice, desquelles l'entité émettrice (e) est apte à recevoir les messages, ce procédé étant **caractérisé en ce qu'**il comporte en outre les étapes consistant à :

   - parmi les entités voisines ($e_i$), identifier une constellation minimale associée à l'entité émettrice (e), c'est-à-dire le plus petit ensemble d'entités voisines ($e_i$) de l'entité émettrice (e) incluses dans un cercle centré sur celle-ci, et dont trois au moins d'entre elles ($e_i$) forment un polygone convexe circonscrivant l'entité émettrice (e) ; et
   - régler la puissance de transmission de l'entité émettrice (e) à une valeur suffisante pour que les messages émis par l'entité émettrice (e) atteignent toutes les entités de la constellation minimale associée à l'entité émettrice (e).

2. Procédé selon la revendication 1, comportant en outre une étape supplémentaire selon laquelle, après avoir réglé sa puissance de transmission, l'entité émettrice communique à chacune des entités voisines ($e_i$) un message comprenant :

   - un identifiant (e) associé à ladite entité émettrice (e),
   - la position de l'entité émettrice (e) et
   - la distance minimale d'émission (p) de l'entité émettrice (e), c'est-à-dire le rayon du plus petit cercle, centré sur l'entité émettrice (e), incluant la constellation minimale associée à l'entité émettrice (e).

3. Procédé selon la revendication 1 ou 2, dans lequel l'identification des entités voisines ($e_i$) consiste à mémoriser dans une première table (L), pour chaque entité voisine ($e_i$) :

   - un identifiant ($e_i$) associé à cette entité voisine ($e_i$),
   - la position ($pos_i$) de cette entité voisine ($e_i$) ainsi que

   - la distance minimale d'émission ($p_i$) de cette entité voisine ($e_i$), c'est-à-dire le rayon du plus petit cercle, centré sur cette entité voisine ($e_i$), incluant la constellation minimale associée à cette entité voisine ($e_i$).

4. Procédé selon la revendication 3, dans lequel chaque entité voisine ($e_i$) communique à l'entité émettrice (e) un message comprenant :

   - l'identifiant associé à l'entité voisine ($e_i$),
   - la position ($pos_i$) de l'entité voisine ($e_i$) et
   - la distance minimale d'émission ($p_i$) de l'entité voisine ($e_i$).

5. Procédé selon la revendication 3 ou 4, dans lequel l'identification des entités appartenant à la constellation minimale associée à l'entité émettrice (e) comprend une étape consistant à mémoriser dans une deuxième table (K), pour chaque entité voisine ($e_i$) appartenant à la constellation minimale :

   - l'identifiant associé à cette entité voisine ($e_i$),
   - la position ($pos_i$) de cette entité voisine ($e_i$) et
   - la distance minimale d'émission ($p_i$) de cette entité voisine ($e_i$).

6. Procédé selon la revendication 5, comprenant en outre les étapes suivantes:

   - identification, parmi les entités voisines ($e_i$) n'appartenant pas à la constellation minimale, d'entités périphériques dont la propre constellation minimale inclut l'entité émettrice (e); et
   - mémorisation, dans une troisième table (J), pour chacune de ces entités périphériques :

      - de l'identifiant associé à cette entité périphérique,
      - de la position de cette entité périphérique et
      - de la distance minimale d'émission de cette entité périphérique.

7. Procédé selon la revendication 6, dans lequel le réglage de la puissance de transmission comprend une étape consistant à sélectionner soit la plus grande des distances séparant l'entité émettrice (e) des entités de la troisième table (J) soit, lorsque cette troisième table (J) est vide, la plus grande des distances séparant l'entité émettrice (e) des entités de la deuxième table (K), le réglage de la puissance étant effectué de manière à adapter la portée de la transmission à la distance sélectionnée.

8. Procédé selon la revendication 7, comportant en outre les étapes supplémentaires selon lesquelles, après avoir réglé sa puissance de transmission :

- l'entité émettrice (e) communique à chacune des entités voisines ($e_i$) un message comprenant son identifiant (e), sa position et sa distance minimale d'émission (p),
- les tables (J, K, L) sont vidées.

9. Procédé selon l'une quelconque des revendications précédentes, comprenant en outre l'étape suivante:

- identification, parmi les entités voisines ($e_i$) n'appartenant pas à la constellation minimale, d'entités périphériques dont la propre constellation minimale inclut l'entité émettrice (e).

10. Procédé selon la revendication 9, dans lequel la valeur de la puissance de transmission est réglée de façon que les messages envoyés par l'entité émettrice (e) atteignent aussi les entités périphériques identifiées.

11. Procédé selon la revendication 10, dan lequel la valeur de la puissance de transmission est réglée comme correspondant à une valeur de puissance minimale telle que les messages envoyés par l'entité émettrice (e) atteignent aussi les entités périphériques identifiées.

12. Unité de communication sans fil destinée à former une entité émettrice (e) d'un réseau d'entités communicantes sans fil, cet unité comprenant :

- des moyens pour identifier des entités voisines ($e_i$) de ladite unité, c'est-à-dire les entités du réseau, distinctes de ladite unité de communication dont cette dernière est apte à recevoir les messages ;
- des moyens pour identifier une constellation minimale associée à ladite unité de communication, c'est-à-dire le plus petit ensemble d'entités voisines ($e_i$) de ladite unité de communication incluses dans un cercle centré sur celle-ci, et dont trois au moins d'entre elles ($e_i$) forment un polygone convexe circonscrivant ladite unité de communication ;
- des moyens de réglage de la puissance de transmission de ladite unité de communication à une valeur suffisante pour que les messages émis par l'unité de communication atteignent toutes les entités de la constellation minimale associée à ladite unité de communication.

13. Unité de communication sans fil selon la revendication 12, comprenant en outre des moyens pour identifier le cas échéant, parmi les entités voisines ($e_i$) n'appartenant pas à la constellation minimale, les entités, dites périphériques, dont la propre constellation minimale inclut ladite unité.

14. Unité de communication sans fil selon la revendication 13, dans lequel la valeur de la puissance de transmission est réglée de façon que les messages envoyés par l'entité émettrice (e) atteignent aussi toute entité périphérique identifiée.

15. Unité de communication sans fil selon la revendication 14, dans lequel la valeur de la puissance de transmission est réglée comme correspondant à une valeur de puissance minimale telle que les messages envoyés par l'entité émettrice (e) atteignent chaque entité de la constellation minimale associée à ladite unité de communication et chaque entité périphérique identifiée.

16. Réseau (1) d'entités communicantes ($e_i$) sans fil, dans lequel chaque entité (e) comprend :

- des moyens pour identifier des entités voisines ($e_i$) de ladite entité (e), c'est-à-dire les entités du réseau, distinctes de ladite entité (e), dont cette dernière est apte à recevoir les messages ;
- des moyens pour identifier une constellation minimale associée à ladite entité (e), c'est-à-dire le plus petit ensemble d'entités voisines ($e_i$) de ladite entité (e) incluses dans un cercle centré sur celle-ci, et dont trois au moins d'entre elles ($e_i$) forment un polygone convexe circonscrivant ladite entité (e) ;
- des moyens de réglage de la puissance de transmission de ladite entité (e) à une valeur suffisante pour que les messages émis par cette entité (e) atteignent toutes les entités de la constellation minimale associée à l'entité (e).

17. Produit programme d'ordinateur, comprenant des instructions pour mettre en oeuvre le procédé selon l'une des revendications 1 à 11, lors d'une exécution par des moyens de traitement intégrés à l'entité émettrice.

**Claims**

1. Method of adjusting the transmitting power of a wireless sending entity (e) in a network of wireless communicating entities, including the step consisting in identifying the entities ($e_i$) adjacent to the sending entity (e), that is, the entities of the network, distinct from the sending entity, from which the sending entity (e) is able to receive the messages, this method being **characterized in that** it also includes steps consisting in:

- identifying, among the adjacent entities ($e_i$), a minimum constellation associated with the sending entity (e), that is the smallest set of entities (e$_i$) adjacent to the sending entity (e) included in a circle centered on the latter, and at least three of which (e$_i$) form a convex polygon circumscribing the sending entity (e); and
- adjusting the transmitting power of the sending entity (e) to a value sufficient for the messages sent by the sending entity (e) to reach all the entities of the minimum constellation associated with the sending entity (e).

2. Method according to Claim 1, also including an additional step according to which, after having adjusted its transmitting power, the sending entity sends each adjacent entity (e$_i$) a message containing:

- an identifier (e) associated with said sending entity (e),
- the position of the sending entity (e) and
- the minimum sending distance (p) of the sending entity (e), that is, the radius of the smallest circle, centered on the sending entity (e), including the minimum constellation associated with the sending entity (e).

3. Method according to Claim 1 or 2, wherein the identification of the adjacent entities (e$_i$) consists in storing in a first table (L), for each adjacent entity (e$_i$):

- an identifier (e$_i$) associated with this adjacent entity (e$_i$),
- the position (pos$_i$) of this adjacent entity (e$_i$) and
- the minimum sending distance (p$_i$) of this adjacent entity (e$_i$), that is, the radius of the smallest circle, centered on this adjacent entity (e$_i$), including the minimum constellation associated with this adjacent entity (e$_i$).

4. Method according to Claim 3, wherein each adjacent entity (e$_i$) sends the sending entity (e) a message containing:

- the identifier associated with the adjacent entity (e$_i$),
- the position (pos$_i$) of the adjacent entity (e$_i$) and
- the minimum sending distance (p$_i$) of the adjacent entity (e$_i$).

5. Method according to Claim 3 or 4, wherein the identification of the entities belonging to the minimum constellation associated with the sending entity (e) includes a step consisting in storing in a second table (K), for each adjacent entity (e$_i$) belonging to the minimum constellation:

- the identifier associated with this adjacent entity (e$_i$),
- the position (pos$_i$) of this adjacent entity (e$_i$) and

- the minimum sending distance (p$_i$) of this adjacent entity (e$_i$).

6. Method according to Claim 5, also comprising the following steps:

- identification, from the adjacent entities (e$_i$) not belonging to the minimum constellation, of peripheral entities whose own minimum constellation includes the sending entity (e); and
- storage, in a third table (J), for each of these peripheral entities of:

- the identifier associated with this peripheral entity,
- the position of this peripheral entity, and
- the minimum sending distance of this peripheral entity.

7. Method according to Claim 6, wherein the adjustment of the transmitting power includes a step consisting in selecting either the greatest of the distances separating the sending entity (e) from the entities of the third table (J) or, when this third table (J) is empty, the greatest of the distances separating the sending entity (e) from the entities of the second table (K), the power adjustment being made in such a way as to adapt the sending range to the selected distance.

8. Method according to Claim 7, also including additional steps according to which, after having adjusted its transmitting power:

- the sending entity (e) sends each of the adjacent entities (e$_i$) a message containing its identifier (e), its position and its minimum sending distance (p),
- the tables (J, K, L) are emptied.

9. Method according to any one of the preceding claims, also comprising the following step:

- identification, from the adjacent entities (e$_i$) not belonging to the minimum constellation, of peripheral entities whose own minimum constellation includes the sending entity (e).

10. Method according to Claim 9, in which the value of the transmitting power is adjusted so that the messages sent by the sending entity (e) also reach the identified peripheral entities.

11. Method according to Claim 10, in which the value of the transmitting power is adjusted to correspond to a minimum power value such that the messages sent by the sending entity (e) also reach the identified peripheral entities.

**12.** Wireless communication unit intended to form a sending entity (e) of a network of wireless communicating entities, this unit comprising:

- means of identifying entities ($e_i$) adjacent to said unit, that is, the entities of the network, distinct from said communication unit, from which the latter is able to receive the messages;
- means of identifying a minimum constellation associated with said communication unit, that is the smallest set of entities ($e_i$) adjacent to said communication unit included in a circle centered on the latter, and at least three of which ($e_i$) form a convex polygon circumscribing said communication unit;
- means of adjusting the transmitting power of said communication unit to a value sufficient for the messages sent by the communication unit to reach all the entities of the minimum constellation associated with said communication unit.

**13.** Wireless communication unit according to Claim 12, also comprising means for identifying, where appropriate, from the adjacent entities ($e_i$) not belonging to the minimum constellation, the entities, called peripheral entities, whose own minimum constellation includes said unit.

**14.** Wireless communication unit according to Claim 13, in which the value of the transmitting power is adjusted so that the messages sent by the sending entity (e) also reach any identified peripheral entity.

**15.** Wireless communication unit according to Claim 14, in which the value of the transmitting power is adjusted to correspond to a minimum power value such that the messages sent by the sending entity (e) reach each entity of the minimum constellation associated with said communication unit and each identified peripheral entity.

**16.** Network (1) of wireless communicating entities ($e_i$), wherein each entity (e) comprises:

- means of identifying entities ($e_i$) adjacent to said entity (e), that is, the entities of the network, distinct from said entity (e), from which the latter is able to receive the messages;
- means of identifying a minimum constellation associated with said entity (e), that is the smallest set of entities ($e_i$) adjacent to said entity (e) included in a circle centered on the latter, and at least three of which ($e_i$) form a convex polygon circumscribing said entity (e);
- means of adjusting the transmitting power of said entity (e) to a value sufficient for the messages sent by this entity (e) to reach all the entities of the minimum constellation associated with the entity (e).

**17.** Computer program product, including instructions for implementing the method according to one of Claims 1 to 11, upon execution by processing means incorporated in the sending entity.

**Patentansprüche**

**1.** Verfahren zur Einstellung der Sendeleistung einer drahtlosen Sendeeinheit (e) in einem Netz drahtlos kommunizierender Einheiten, das den Schritt aufweist, der darin besteht, die Nachbareinheiten ($e_i$) der Sendeeinheit (e) zu identifizieren, das heißt die Einheiten des Netzes, die von der Sendeeinheit unterschiedlich sind, von denen die Sendeeinheit (e) in der Lage ist, Meldungen zu empfangen, wobei dieses Verfahren **dadurch gekennzeichnet ist, dass** es ferner die folgenden Schritte aufweist:

- unter den Nachbareinheiten ($e_i$) Identifizieren einer Mindestkonstellation, die der Sendeeinheit (e) zugeordnet ist, das heißt die kleinste Gesamtheit Nachbareinheiten ($e_i$) der Sendeeinheit (e), die in einem Kreis enthalten sind, der auf diese zentriert ist, und von welchen mindestens drei ($e_i$) ein konvexes Vieleck bilden, das die Sendeeinheit (e) einschließt; und
- Einstellen der Sendeleistung der Sendeeinheit (e) auf einen Wert, der ausreicht, damit die von der Sendeeinheit (e) gesendeten Meldungen alle Einheiten der Mindestkonstellation, die der Sendeeinheit (e) zugeordnet ist, erreichen.

**2.** Verfahren nach Anspruch 1, das ferner einen zusätzlichen Schritt aufweist, gemäß welchem die Sendeeinheit nach dem Einstellen ihrer Sendeleistung jeder der Nachbareinheiten ($e_i$) eine Meldung mitteilt, die Folgendes aufweist:

- einen Identifikator (e), der der Sendeeinheit (e) zugeordnet ist,
- die Position der Sendeeinheit (e) und
- die Mindestsendeentfernung (p) der Sendeeinheit (e), das heißt der Radius des kleinsten Kreises, der auf die Sendeeinheit (e) zentriert ist, der die Mindestkonstellation enthält, die der Sendeeinheit (e) zugeordnet ist.

**3.** Verfahren nach Anspruch 1 oder 2, bei dem die Identifikation der Nachbareinheiten ($e_i$) darin besteht, in einer ersten Tabelle (L) für jede Nachbareinheit ($e_i$) Folgendes zu speichern:

- einen Identifikator ($e_i$), der dieser Nachbareinheit ($e_i$) zugeordnet ist,
- die Position ($pos_i$) dieser Nachbareinheit ($e_i$)

sowie
- die Mindestsendeentfernung ($p_i$) dieser Nachbareinheit ($e_i$), das heißt der Radius des kleinsten Kreises, der auf diese Nachbareinheit ($e_i$) zentriert ist, der die Mindestkonstellation enthält, die dieser Nachbareinheit ($e_i$) zugeordnet ist.

4. Verfahren nach Anspruch 3, bei dem jede Nachbareinheit ($e_i$) der Sendeeinheit (e) eine Meldung mitteilt, die Folgendes aufweist:

    - den Identifikator, der der Nachbareinheit ($e_i$) zugeordnet ist,
    - die Position ($pos_i$) der Nachbareinheit ($e_i$) und
    - die Mindestsendeentfernung ($p_i$) der Nachbareinheit ($e_i$).

5. Verfahren nach Anspruch 3 oder 4, bei dem die Identifikation der Einheiten, die zu der Mindestkonstellation gehören, die zu der Sendeeinheit (e) zugeordnet ist, einen Schritt aufweist, der darin besteht, in einer zweiten Tabelle (K) für jede Nachbareinheit ($e_i$), die zu der Mindestkonstellation zugeordnet ist, Folgendes zu speichern:

    - den zu dieser Nachbareinheit ($e_i$) gehörenden Identifikator,
    - die Position ($pos_i$) dieser Nachbareinheit ($e_i$) und
    - die Mindestsendeentfernung ($p_i$) dieser Nachbareinheit ($e_i$).

6. Verfahren nach Anspruch 5, das ferner die folgenden Schritte aufweist:

    - unter den Nachbareinheiten ($e_i$), die nicht zu der Mindestkonstellation gehören, Identifikation peripherer Einheiten, deren eigene Mindestkonstellation die Sendeeinheit (e) enthält, und
    - Speichern in einer dritten Tabelle (J) für jede dieser peripheren Einheiten:

        - des Identifikators, der dieser peripheren Einheit zugeordnet ist,
        - der Position dieser peripheren Einheit und
        - der Mindestsendeentfernung dieser peripheren Einheit.

7. Verfahren nach Anspruch 6, bei dem die Einstellung der Sendeleistung einen Schritt aufweist, der darin besteht, entweder die größte der Entfernungen auszuwählen, die die Sendeeinheit (e) von den Einheiten der dritten Tabelle (J) trennen, oder, wenn diese dritte Tabelle (J) leer ist, die größte der Entfernungen, die die Sendeeinheit (e) von den Einheiten der zweiten Tabelle (K) trennen, wobei das Einstellen der Leistung derart ausgeführt wird, dass die Reichweite der Übertragung der ausgewählten Entfernung angepasst ist.

8. Verfahren nach Anspruch 7, das ferner die zusätzlichen Schritte aufweist, gemäß welchen nach dem Einstellen ihrer Sendeleistung:

    - die Sendeeinheit (e) jeder Nachbareinheit ($e_i$) eine Meldung mitteilt, die ihren Identifikator (e), ihre Position und ihre Mindestsendeentfernung (p) enthält,
    - die Tabellen (J, K, L) geleert werden.

9. Verfahren nach einem der vorhergehenden Ansprüche, das ferner den folgenden Schritt aufweist:

    - unter den Nachbareinheiten ($e_i$), die nicht zu der Mindestkonstellation gehören, Identifikation peripherer Einheiten, deren eigene Mindestkonstellation die Sendeeinheit (e) enthält.

10. Verfahren nach Anspruch 9, bei dem der Wert der Sendeleistung derart eingestellt wird, dass die von der Sendeeinheit (e) gesendeten Meldungen auch die identifizierten peripheren Einheiten erreichen.

11. Verfahren nach Anspruch 10, bei dem der Wert der Sendeleistung so eingestellt wird, dass er einem Mindestleistungswert entspricht, so dass die von der Sendeeinheit (e) gesendeten Meldungen auch die identifizierten peripheren Einheiten erreichen.

12. Drahtlose Kommunikationseinheit, die dazu bestimmt ist, eine Sendeeinheit (e) eines Netzes drahtlos kommunizierender Einheiten zu bilden, wobei diese Einheit Folgendes aufweist:

    - Mittel zum Identifizieren der Nachbareinheiten ($e_i$) der Einheit, das heißt der Einheiten des Netzes, die von der Kommunikationseinheit unterschiedlich sind, von welchen Letztere die Meldungen empfangen fähig ist;
    - Mittel zum Identifizieren einer Mindestkonstellation, die der Kommunikationseinheit zugeordnet ist, das heißt der kleinsten Einheit Nachbareinheiten ($e_i$) der Kommunikationseinheit, die in einem auf dieser zentrierten Kreis enthalten sind, und von welchen mindestens drei ($e_i$) ein konvexes Vieleck bilden, das die Kommunikationseinheit einschließt;
    - Mittel zum Einstellen der Sendeleistung der Kommunikationseinheit auf einen Wert, der ausreicht, damit die von der Kommunikationseinheit gesendeten Meldungen alle Einheiten der Mindestkonstellation erreichen, die der Kommunikationseinheit zugeordnet ist.

13. Drahtlose Kommunikationseinheit nach Anspruch 12, die ferner Mittel enthält, um gegebenenfalls unter den Nachbareinheiten ($e_i$), die nicht zu der Mindestkonstellation gehören, die so genannten peripheren Einheiten zu identifizieren, deren eigene Mindestkonstellation die Einheit enthält.

**14.** Drahtlose Kommunikationseinheit nach Anspruch 13, bei der der Wert der Sendeleistung derart eingestellt ist, dass die von der Sendeeinheit (e) gesendeten Meldungen auch jede identifizierte periphere Einheit erreichen.

**15.** Drahtlose Kommunikationseinheit nach Anspruch 14, bei der der Wert der Sendeleistung so eingestellt ist, dass er einem Mindestleistungswert entspricht, so dass die von der Sendeeinheit (e) gesendeten Meldungen jede Einheit der Mindestkonstellation, die der Kommunikationseinheit zugeordnet ist, und jede identifizierte periphere Einheit erreichen.

**16.** Netz (1) drahtlos kommunizierender Einheiten ($e_i$), in dem jede Einheit (e) Folgendes aufweist:

- Mittel zum Identifizieren der Nachbareinheiten ($e_i$) der Einheit (e), das heißt der Einheiten des Netzes, die von der Einheit (e) unterschiedlich sind, von welchen Letztere die Meldungen empfangen kann;
- Mittel zum Identifizieren einer Mindestkonstellation, die der Einheit (e) zugeordnet ist, das heißt die kleinste Gesamtheit von Nachbareinheiten ($e_i$) der Einheit (e), die in einem Kreis enthalten sind, der auf diese zentriert ist, und von welchen mindestens drei ($e_i$) ein konvexes Vieleck bilden, das die Einheit (e) einschließt;
- Mittel zum Einstellen der Sendeleistung der Einheit (e) auf einen Wert, der ausreicht, damit die von dieser Einheit (e) gesendeten Meldungen alle Einheiten der zu der Einheit (e) gehörenden Mindestkonstellation erreichen.

**17.** Computerprogrammprodukt, das Anweisungen aufweist, um das Verfahren nach einem der Ansprüche 1 bis 11 bei der Ausführung durch Verarbeitungsmittel, die in die Sendeeinheit integriert sind, umzusetzen.

## FIG. 1

ZT3

ZT2

C0

ZT1

D

C

e

B

A

E

F

## FIG. 2

Y

Q

V_A

ZT_A

O

H

N

V_F

J

C

B

S

I

D

A

G

E

F

P

M

T

K

L

ZT_F

R

## FIG. 4

X

Réception par e des données $e_i$, $pos_i$, $p_i$

Inscrire les données $e_i$, $pos_i$, $p_i$ dans la table L

$i = 1$

Inscrire les données $e_i$, $pos_i$, $p_i$ dans la table K

Supprimer les données $e_i$, $pos_i$, $p_i$ de L

Les entités dans K permettent-elles le respect de la règle ?

$i = i + 1$

Calculer la distance $d_i$ entre e et $e_i$ dans K

# FIG. 3a

Identifier p = sup{d$_i$}

La table L est-elle vide ?

OUI

NON

Régler la puissance d'émission tel que le rayon d'émission R = p

Vider K

i = P + 1

Calculer la distance d$_i$ entre e et e$_i$ dans L

Non pour tout i, i = P+1 à N

d$_i$ ≤ p$_i$ ?

OUI

NON

Régler la puissance d'émission tel que le rayon d'émission R = p

Vider K, L

Inscrire les données e$_i$, pos$_i$, p$_i$ dans la table J

Mémoriser d$_i$

i = N ?

NON

i = i + 1

OUI

**FIG. 3b**

Calculer d$_j$ = sup{d$_i$}

Régler la puissance d'émission tel que le rayon d'émission R = d$_j$

Vider J, K, L

**EP 1 665 682 B1**

## RÉFÉRENCES CITÉES DANS LA DESCRIPTION

**Documents brevets cités dans la description**

- WO 0203567 A

- US 20030060168 A